# EUROPÄISCHE PATENTANMELDUNG

(11) **EP 2 062 672 A1**
(43) Veröffentlichungstag der Anmeldung: **27.05.2009**
(21) Anmeldenummer: 07022503.2
(22) Anmeldetag: 20.11.2007
(51) Int. Cl.: B23K 1/00, B23K 1/19

(54) **Verfahren zum Löten weiter Spalte**

(71) Anmelder: Siemens Aktiengesellschaft, 80333 München (DE)
(72) Erfinder: Galic, Raoul, 45468 Mühlheim an der Ruhr (DE); Heinecke, Brigitte, Dr., 45468 Mülheim an der Ruhr (DE); Herz, Margarete, 45133 Essen (DE); Krusch, Claus, Dr., 45473 Mülheim an der Ruhr (DE); Vosberg, Volker, Dr., 45476 Mülheim an der Ruhr (DE)

(57) **Zusammenfassung**

Verfahren zur Reparatur von weiten Spalten (7) in einem Substrat (4), bei dem eine Entmischung von Füllwerkstoff (13) und Lot dadurch verhindert wird, dass in einem zweistufigen Prozess zuerst der Füllwerkstoff (13) und dann das Lot (22) eingebracht werden.

## Beschreibung

Die Erfindung betrifft ein Verfahren zum Löten weiter Spalte.

Im Rahmen des Refurbishments von Heißgaskomponenten kann es notwendig sein Defekte wie weite Spalte, die nicht mittels des herkömmlichen Engspaltlötverfahrens verfüllt werden können, mit einer mechanisch belastbaren Füllung zu versehen.

Beim Engspaltlöten wird auf den Defekt ein Hochtemperaturlotgrundwerkstoffgemisch als Depot aufgetragen, um im Lötzyklus unter Nutzung des Kapillareffekts das Hochtemperaturlot in dem Spalt einsaugen zu lassen.

An weiten Spalten kann das Verfahren aufgrund des zu niedrigen Kapillareffekts nicht angewendet werden, da der Spalt nicht oder nur ungenügend gefüllt wird.
Eine alternative Lotapplikationsmethode ist die mechanische Befüllung des Spalts mit dem Lotgrundwerkstoffgemisch. Dies führt jedoch bei größeren Spalttiefen und Spaltweiten zur Entmischung von Lot- und Grundwerkstoff oder zumindest zu einer ungleichen Verteilung von Lot- und Grundwerkstoff.

Es ist daher Aufgabe der Erfindung ein Verfahren aufzuzeigen, das die oben genannte Problematik überwindet.

Die Aufgabe wird gelöst durch ein Verfahren gemäß Anspruch 1.

In den Unteransprüchen sind weitere vorteilhafte Maßnahmen aufgelistet, die in beliebiger Art und Weise miteinander kombiniert werden können, um weitere Vorteile zu erzielen.

Es zeigen:
- Figur 1: schematisch den Ablauf des erfindungsgemäßen Verfahrens,
- Figur 2: eine Gasturbine,
- Figur 3: perspektivisch eine Turbinenschaufel,
- Figur 4: perspektivisch eine Brennkammer,
- Figur 5: eine Liste von Superlegierungen.

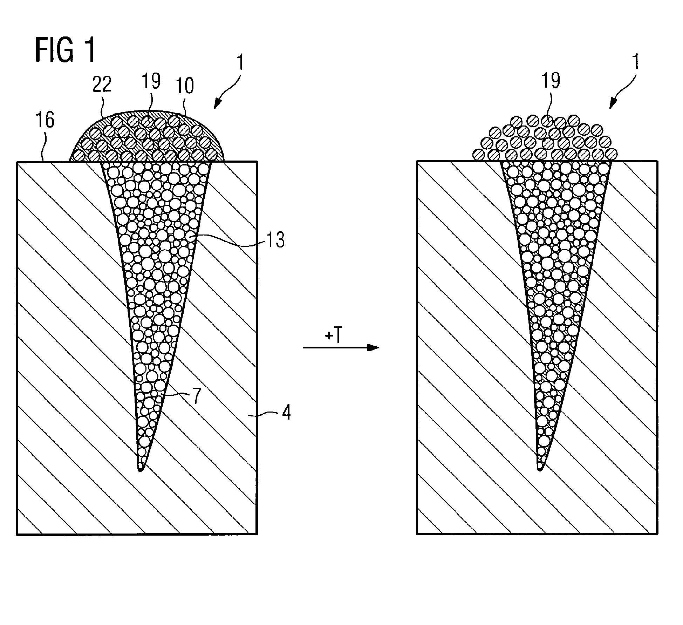

Figur 1 zeigt schematisch den Ablauf des Verfahrens.

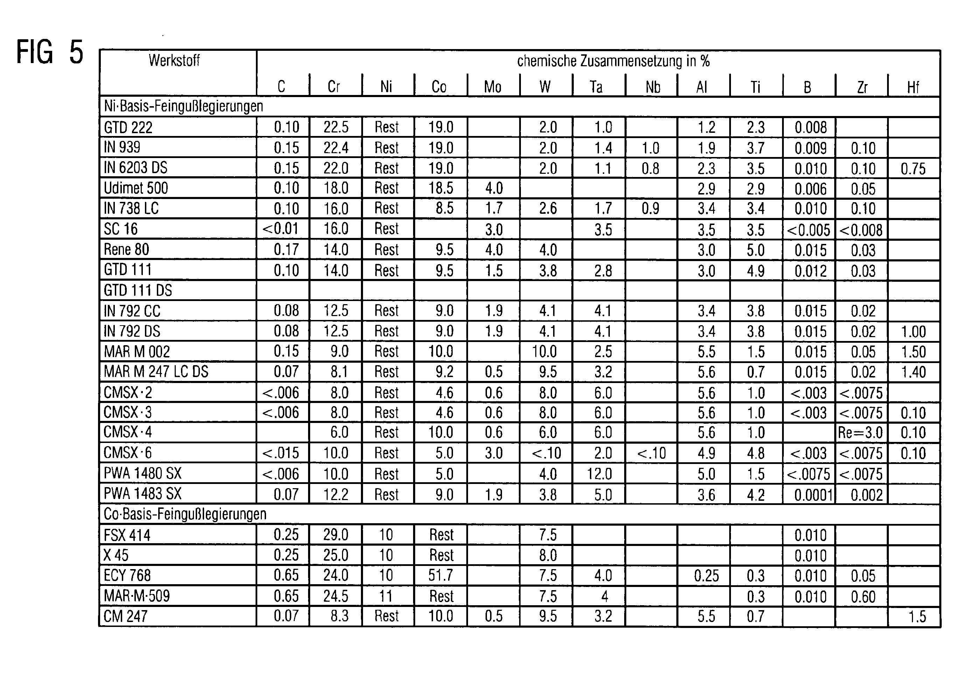

Das Bauteil 1, 120, 130, 155 weist ein Substrat 4, vorzugsweise aus einer nickel- oder kobaltbasierten Superlegierung gemäß Figur 5 auf.

In dem Substrat 4 ist ein weiter Spalt 7 vorhanden. Weite Spalte sind Spaltweiten ab 1mm, insbesondere ab 2mm und ganz insbesondere bis 3mm.
Vorzugsweise sind die Spalte dabei mindestens 1mm tief.

Der Spalt 7 wird vorzugsweise von Verunreinigungen wie Oxiden oder Korrosionprodukten gereinigt. Danach oder anstelle der Entfernung der Oxide durch eine chemische Behandlung wird der Spalt 7 vorzugsweise mechanisch bearbeitet, um eine definierte Kontur herzustellen.

In einem ersten Schritt wird ein Pulver 13 in den Spalt 7 eingebracht, das bei einer Löttemperatur T₂ eines Lots 10 nicht aufschmilzt. Dies ist vorzugsweise ein zum Substrat 4 artgleicher Werkstoff oder vorzugsweise ein Material, das dasselbe Material des Substrats 4 aufweist und insbesondere daraus besteht. Dies kann vorzugsweise auch eine Keramik sein.

Das Einbringen des Pulvers 13 kann auf verschiedene Art und Weise erfolgen, z.B. durch trockenes Einstreuen, durch Kaltgasspritzen, durch Schlickereintrag usw.

Der Spalt 7 wird insbesondere bis zu einer Oberfläche 16 des Substrats 4 mit dem Pulver 13 befüllt.
Das Pulver 13 schmilzt bei der Löttemperatur T_{L} nicht auf.

Dann wird im Bereich des Spalts 7 an der Oberfläche 16 ein Lot 10 aufgebracht. Das Lot 10 weist vorzugsweise zur Stabilisierung bei der Lottemperatur Depotkörner 19 und ein Lotdepot 22 aus einer Lotlegierung auf. Die Depotkörner müssen im pastösen Zustand benetzbar sein und dürfen bei Löttemperatur nicht schmelzen. Wenn es sich nicht um Grundwerkstoffkörner handelt, muss ein Einschwemmen in den Spalt während des Lötens durch die Größe der Körner vermieden werden.

Da der Spalt 7 mit dem Pulver 13 bereits gefüllt ist, kann zur Stabilisierung des Lotdepots (Paste) ein Träger verwendet werden, der im pastösen Zustand des Depots benetzt wird, nicht aber vom geschmolzenen Lot.

Bei einer Wärmebehandlung (Löten) schmilzt das Lotdepot 22 auf und wird aufgrund des Kapillareffekts in die Kapillaren, die durch die Körner des Pulvers 13 entstanden sind, in den Spalt 7 hineingezogen, so dass eine vollständige Befüllung des Spalts 7 erfolgt.

Im letzten Schritt können die ggf. verwendeten Depotkörner 19 entfernt werden.

Der weite Spalt 7 ist jetzt vollständig befüllt und weist eine gleichmäßige Verteilung von dem Pulver 13, einer Lotmatrix, also beispielsweise einem Grundwerkstoff, und Lotmaterial auf, so dass hier eine hohe mechanische Festigkeit gegeben ist.

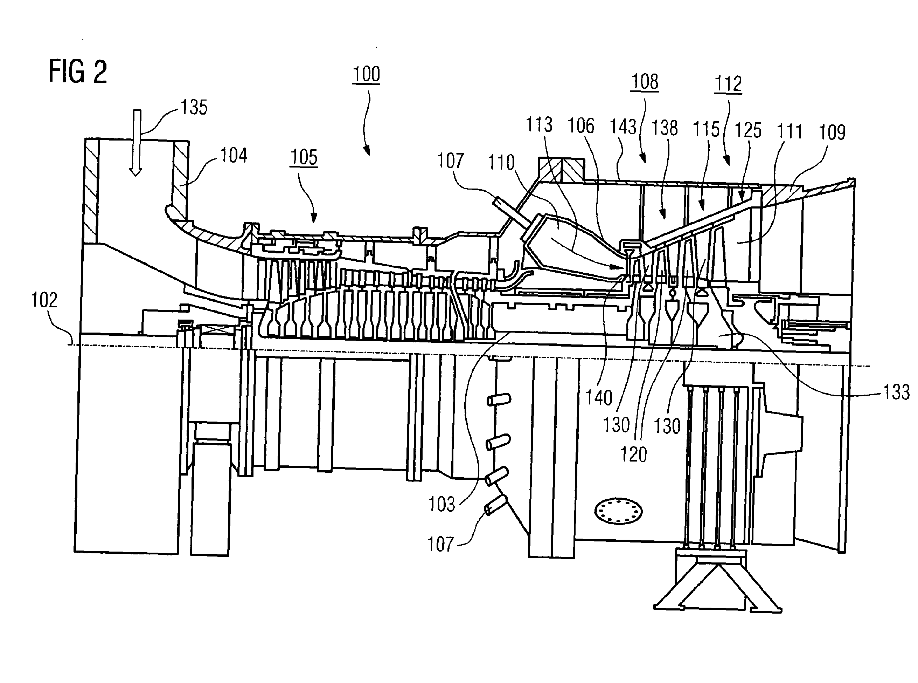

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

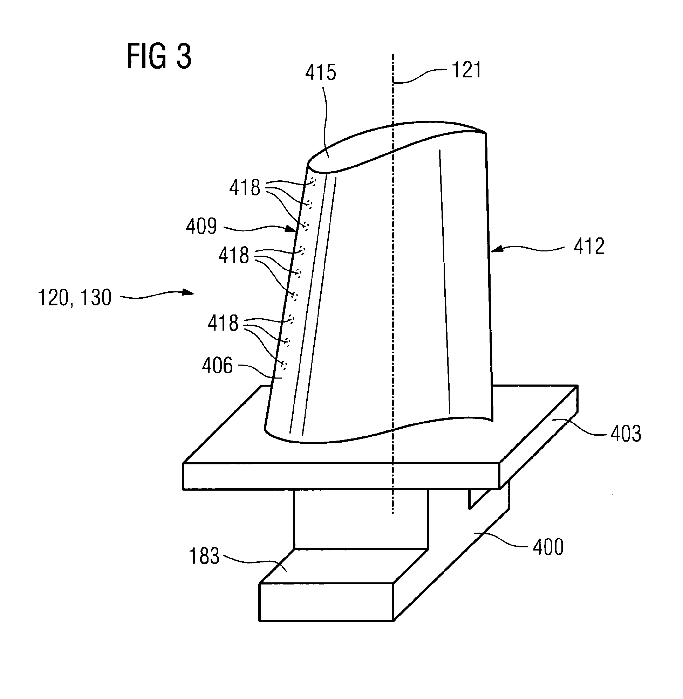

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

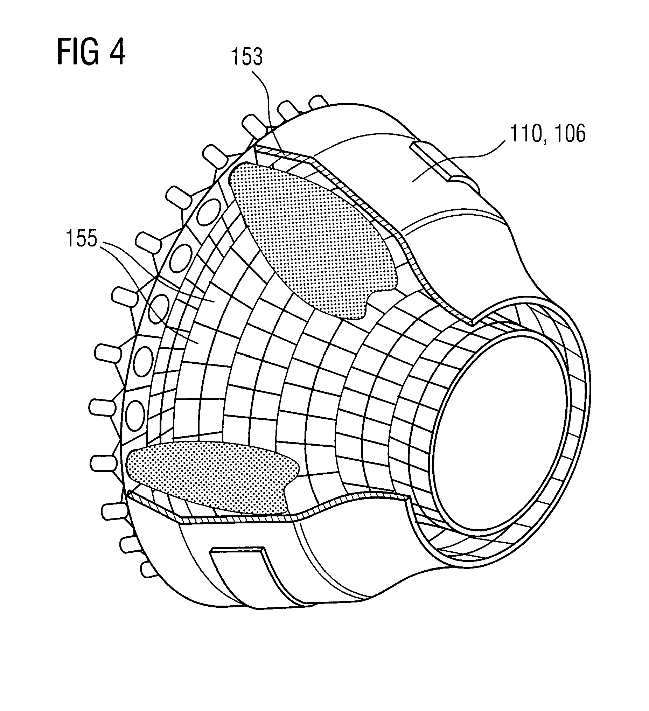

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Lot-Reparatur weiter Spalte (7) eines Bauteils (1, 120, 130, 155) bei einer Löttemperatur (T_{L}), bei dem in einem ersten Schritt ein Pulver (13) in den weiten Spalt (7) eingebracht wird,
das (13) bei der Löttemperatur (T_{L}) nicht aufschmilzt und wobei in einem anschließenden weiteren Schritt ein Lot (10) in den weiten Spalt (7) mit dem Pulver (13) eingebracht wird,
das (10) bei der Löttemperatur (T_{L}) aufschmilzt.

2. Verfahren nach Anspruch 1,
bei dem das Pulver (13) das Material des Substrats (4) des Bauteils (1, 120, 130, 155) aufweist,
insbesondere aus dem Material des Substrats (4) besteht.

3. Verfahren nach Anspruch 1 oder 2,
bei dem das Lot (10) auf den Spalt (7) mit dem Pulver (13) im Spalt (7) aufgebracht wird,
bei dem das Lot (10) aufgeschmolzen wird und
bei dem der Spalt (7) mit dem Pulver (13) mit dem flüssigen Lot (10) gefüllt wird.

4. Verfahren nach Anspruch 1, 2 oder 3,
bei dem der Spalt (7) vor dem Befüllen mit dem Pulver (13) mechanisch bearbeitet wird,
um eine definierte Kontur herzustellen.

5. Verfahren nach Anspruch 1 oder 3,
bei dem das Lot (10) auf den Spalt (7),
der das Pulver (13) bereits enthält,
aufgebracht wird und
wobei das Lot (10) eine Mischung aus Lotdepot (22) und Depotkörnern (19) aufweist.
